# EUROPEAN PATENT SPECIFICATION

(11) **EP 1 770 951 B1**
(45) Date of publication and mention of the grant of the patent: **16.09.2009**
(21) Application number: 06253707.1
(22) Date of filing: 14.07.2006
(51) Int. Cl.: H04L 29/06

(54) **Management of security in storage networks**
Sicherheitsverwaltung in Speichernetzwerken
Gestion de la sécurité dans des réseaux de stockage

(30) Priority: 28.09.2005 US 239549
(43) Date of publication of application: 04.04.2007
(73) Proprietor: Hitachi, Ltd., Chiyoda-ku Tokyo (JP)
(72) Inventor: Mimatsu, Yasuyuki, c/o Hitachi Ltd, IP Group, Tokyo 100-8220 (JP)
(74) Representative: Calderbank, Thomas Roger

(56) References cited:
- WO-A2-01/18628
- US-A1- 2005 120 082

## Description

This invention relates to a method for managing storage networks, and especially to techniques for managing the authentication of connections and communications within storage networks and the encryption of communications to and from disk volumes in such storage networks. It also relates to techniques for provisioning additional volumes for such networks.

Organizations throughout the world are now involved in millions of data transactions which include enormous amounts of text, video, graphical and audio information which is being categorized, stored, accessed, and transferred daily. The volume of such information continues to grow rapidly. One technique for managing such massive amounts of information involves the use of storage systems. Storage systems include large numbers of hard disk drives operating under various control mechanisms to record, backup, and reproduce this enormous amount of data. This growing amount of data requires most companies to manage the data carefully with their information technology systems.

Security of the stored data is one of the most important concerns for large enterprises and government organizations. One conventional means for preventing illegal access to confidential data in storage systems is to encrypt the data. Data written by the host computer can be encrypted by a storage controller before the data is stored in the disk drive so that it cannot be read by illegal users, even if the disk drive itself is stolen. A typical storage system with an encryption function is disclosed in publication WO 2002/093314. In addition, some organizations are developing standards for the security of storage systems. For example, IEEE p1619 defines standards for cryptographic algorithms and for methods of encrypting data before it is sent to storage devices.

In addition, there is a growing awareness of the need for security in the storage network. To help prevent unauthorized access to data when routed from a host through a switch to a storage network, over the Internet, over an Ethernet network, etc., it is becoming increasingly common to encrypt the connection and communication information among the ports. Fibre Channel security protocols (FC-SP) are being developed with regard to the security of Fibre Channel storage networks.

WO 01/18628 discloses a local content server system (LCS) for creating a secure environment for digital content, which system comprises: a communications port in communication for connecting the LCS via a network to at least one Secure Electronic Content Distributor (SECD), which SECD is capable of storing a plurality of data sets, is capable of receiving a request to transfer at least one content data set, and is capable of transmitting the at least one content data set in a secured transmission; a rewritable storage medium whereby content received from outside the LCS may be stored and retrieved; a domain processor that imposes rules and procedures for content being transferred between the LCS and devices outside the LCS, and a programmable address module which can be programmed with an identification code uniquely associated with the LCS. The LCS is provided with rules and procedures for accepting and transmitting content data. Optionally, the system may further comprise: an interface to permit the LCS to communicate with one or more Satellite Units (SU) which may be connected to the system through the interface, which SUs are capable of receiving and transmitting digital content; at least one SU; and/or at least one SECD. The SECD may have a storage device for storing a plurality of data sets, as well as a transaction processor for validating the request to purchase and for processing payment for a request to retrieve one of the data sets. The SECD typically includes a security module for encrypting or otherwise securitizing data which the SECD may transmit.

One disadvantage of these security measures is that when a storage network contains many devices, ports, disk volumes, hosts and switches, it is difficult to understand which disk volumes, which connections, and what communications among which ports are secure. The result is that the information about authentication and encryption is distributed around the network making it difficult for users, service technicians and the like to understand where security is present, where it is not present, and where it should be present. For example, when an administrator provisions a secure disk volume to a host computer with a secure path, at present the administrator needs to manually look for encrypted volumes and authenticated and encrypted communication paths among a large number of ports and disk volumes. What is needed is an improved system to provide higher level information about security information of storage networks and enable provisioning of disk volumes according to the desired security levels.

This invention enables security information, including authentication and encryption of connection, communication, and disk volumes to be collected by a management server from devices throughout a storage network. The collected information is correlated to generate a simple presentation which is easy to understand by users and service technicians. The collected information is also used to enable selection of disk volumes and secure paths during provisioning of disk volumes to particular host computers.

In a preferred embodiment a storage system includes ports connected via communications links to ports in external devices, where the communications link is capable of transferring authenticated communications. A storage controller connected to storage media receives data via the ports, and the storage media can store encrypted data using an encryption technique. A management program operates to determine whether the communications link is authenticated and to determine whether an encryption technique was used in the storage media, and maintains a record of such determinations. The resulting information can be displayed to the users or storage technicians.

A method of collecting the information includes compiling a list of devices, ports and storage media within the system, and for each collecting information about authentication states for each port and encryption states for each storage media. The information may then be presented to a user or technician, enabling easier provisioning of additional storage volumes or other operations.

### In the drawings

Figure 1 illustrates a typical storage system to which this invention has been applied;
Figure 2 illustrates a table of discovered logical units;
Figure 3 is a table of encryption algorithms;
Figure 4 is a table of encryption algorithms associated with particular volumes;
Figure 5 is a table of logical unit numbers and associated worldwide names;
Figure 6 is a table of internet protocol addresses for particular devices;
Figure 7 is a block diagram of a Fibre Channel module;
Figure 8 is a table listing priority algorithms for each port;
Figure 9 illustrates an encryption algorithm table;
Figure 10 illustrates a connection authentication table;
Figure 11 illustrates a connection state table;
Figure 12 illustrates a communication state table;
Figure 13 is a flowchart of management program operations;
Figure 14 is a flowchart for configuring security settings;
Figure 15 illustrates an SAN security table;
Figure 16 illustrates a process for creating the SAN security table;
Figure 17 illustrates a storage security table;
Figure 18 is a flowchart of operations for making a storage security table;
Figure 19 is a flowchart of creation of copy values for a selected port, one of the steps in Figure 17;
Figures 20A and 20B illustrate a process for volume provisioning.

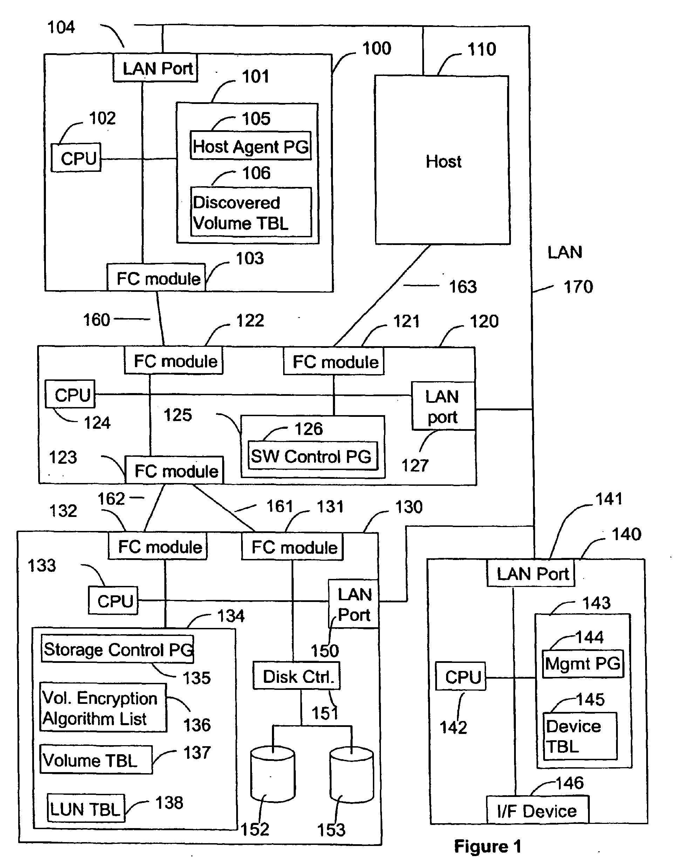

Figure 1 is a block diagram of a enterprise computing system to which the method and apparatus of this invention has been applied. As shown in Figure 1, generally host computers 100 and 110 are connected to a Fibre Channel switch 120 and to a storage system 130 by virtue of Fibre Channel interconnections 160, 161, 162, and 163. The interconnection system enables the hosts 100 and 110 to read and write data to and from the storage system 130, and particularly to and from disk arrays such as 152 and 153.

In addition to the Fibre Channel connections, a local area network 170 may also interconnect the hosts 100 and 110 to each other and to the switch 120, to the storage system 130, and to a management server 140. Generally being a slower connection than the Fibre Channels 160, 163 etc., LAN 170 is typically used to communicate control and configuration information. Server 140 can send instructions to and receive information from the devices connected to it through LAN port 141.

Host 100 is a typical host including a host agent program 105 and memory 101. The agent program manages the security information of the host computer and communicates with the management server 140 through LAN port 104. The host also maintains a discovered volume table 106 that contains information about storage volumes accessible by that host, i.e. "discovered." The host computer 100 is connected to a Fibre Channel switch and associated storage network through a Fibre Channel interface module 103. Hosts such as host 100 are commercially available from companies around the world.

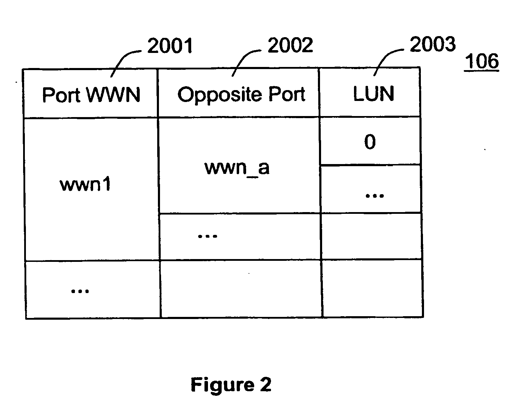

The discovered volume table 106 typically contains information such as depicted in Figure 2, notably the worldwide name (WWN) of each port of the host, the name of the opposite port 2002 and the logical unit number (LUN) of each discovered volume. The volumes are typically provided by hard disk drives in storage system 130, as well as other storage systems coupled to switch 120. As suggested by Figure 2, a given port131 may have many logical units associated with it.

The Fibre Channel switch 120 depicted in Figure 1 includes a CPU 124 which executes a control program 126 stored in memory 125. The switch control program controls the switch 120, manages security information regarding the switch, and communicates with the management server 140 through port 127 on the local area network. The Fibre Channel switch 120 is connected to other devices through interface modules 121, 122, and 123. Switches such as switch 120 enable multiple hosts to interface with multiple storage systems.

Storage system 130 is also illustrated in block diagram form in Figure 1. As shown there, the storage system includes a CPU 133 which executes a storage control program 135 residing in memory 134. The storage control program controls the overall operation of the storage system, including encrypting and decrypting data in the disk volumes 152 and 153. The storage control program also manages the security information of the storage system and communicates with the management server through LAN port 150. Memory 134 also contains a volume encryption algorithm list 136, a volume table 137 and a logical unit number table 138 as will be discussed below. Storage systems such as system 130 typically include numerous storage media 152 and 153, typically in the form of hard disk drives. These drives are usually configured using protocols based upon known Redundant Array of Inexpensive Disk (RAID) technology to provide enhanced reliability for the data storage and retrieval operations. A disk controller 151 controls input/output operations between the host and the storage media. Typically, the storage system 130 will include a large cache memory (not shown) to which information can be written by the host, enabling the host to operate at its own speed without being delayed by the slower access times of the storage media in the storage system in relation to the host.

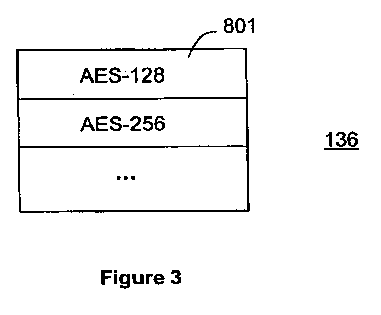

The volume encryption algorithm list 136 identifies the encryption algorithms which the storage system can use to encrypt data in the disk volumes. Figure 3 illustrates the volume encryption list 136, as well as typical known encryption technology capable of being employed in the system.

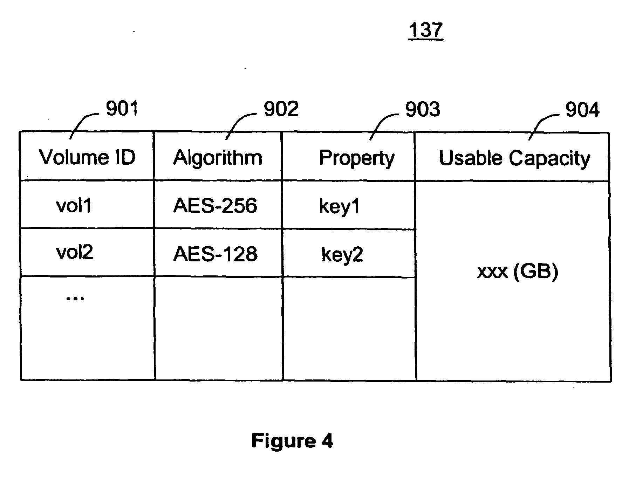

The volume table 137 is shown in more detail in Figure 4. As illustrated there, the volume table includes a volume ID 901, the encryption algorithm 902 used for that particular volume, and desired properties 903 of the encryption. For example, column 903 will typically list the encryption key used for that particular volume. The volume table also preferably includes a column 904 which designates the total usable (not used yet) capacity of the storage system.

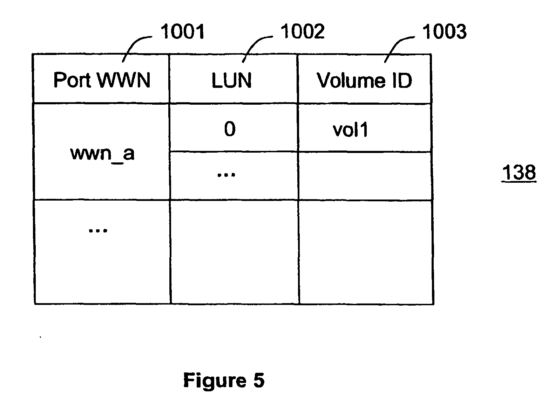

The logical unit number table (LUN TBL) 138 shown in Figure 1 is shown in more detail in Figure 5. The logical unit number table 138 contains port information 1001, typically the worldwide name of the port through which a particular disk volume is to be accessed. Also included in table 138 is the logical unit number (LUN) for the disk volumes associated with that port, and a volume identification 1003 for that volume in the storage system. As illustrated, numerous LUNs are usually accessible through a given port.

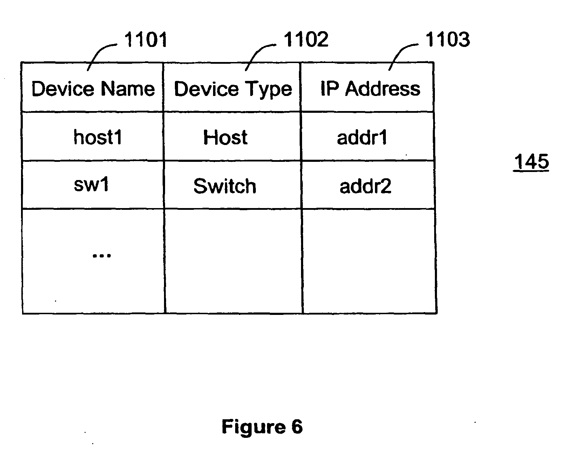

Returning to Figure 1, in management server 140 the CPU 142 will execute a management program 144 from memory 143. The management program interacts with an administrator through an appropriate interface (mouse, keyboard, display, etc.) 146, and, as mentioned above, communicates with other devices through its local area network port 141. In the preferred embodiment herein, the management server 140 also processes security information collected from other devices enabling it to display this information in an easy-to-understand manner for the system administrator. The management server 140 includes a device table 145 which is illustrated in Figure 6. "Devices" are all of the other elements of the overall system, e.g. in Figure 1, hosts, switches, storage arrays. The device table 145 includes information about the device name 1101, the device type 1102, and any IP address 1103 for that device. The IP addresses are used by the LAN 170 for communication. Device table 145 preferably includes the name, type and address for all devices coupled directly or indirectly to that management server 140.

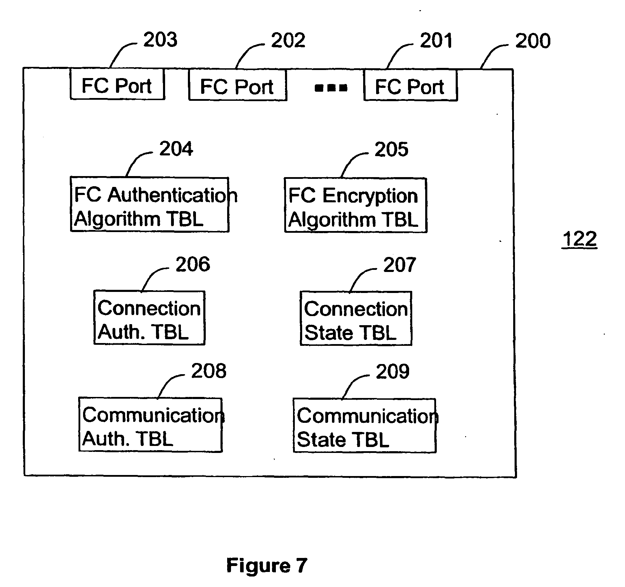

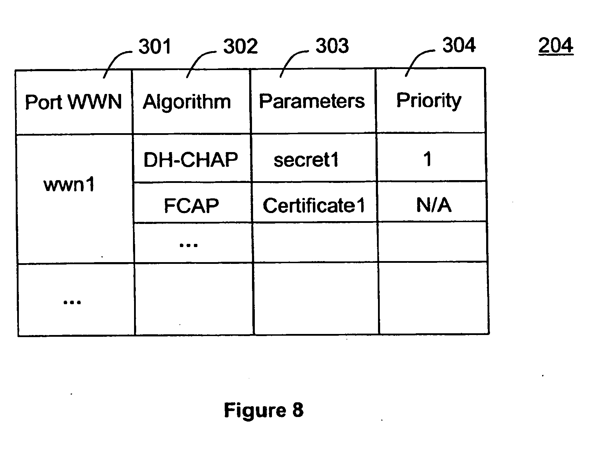

Figure 7 is a more detailed block diagram of one of the Fibre Channel modules 122 shown in Figure 1. The module 122 illustrated in Figure 7 is typical of all of the Fibre Channel modules, e.g., 103, 121, 131, and 132 illustrated in Figure 1. The Fibre Channel module typically will have Fibre Channel ports 201, 202, and 203 as illustrated. In addition, it will preferably include a Fibre Channel authentication algorithm table 204, a Fibre Channel encryption algorithm table 205, a connection authentication table 206, a connection state table 207, a communication authentication table 208, and a communication state table 209. Figures 8-12 illustrate each of these tables in more detail.

Figure 8 illustrates the Fibre Channel authentication algorithm table 204. For each port in the Fibre Channel module 122 associated with this table, the table includes the worldwide name of the port 301, the authentication algorithm 302 which that port can process, the parameters necessary to use that algorithm 303, and the priority of the algorithms for each port. If the priority is set to N/A, as shown for one example in Figure 8, that algorithm is not used.

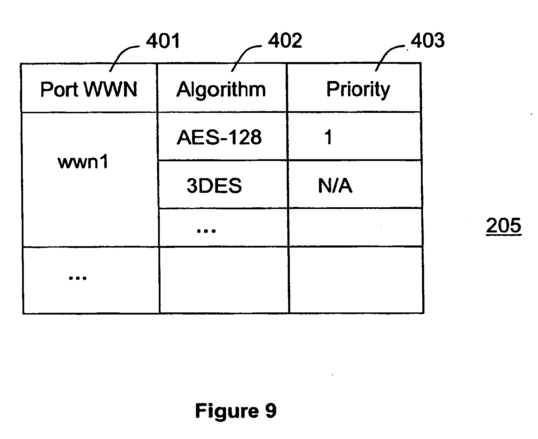

Figure 9 illustrates the Fibre Channel encryption algorithm table associated with module 122. As shown there, for each port 401 the worldwide name (WWN), the encryption algorithms associated with that port 402, and the priority 403 are shown. If N/A is indicated, then that port cannot process that encryption algorithm.

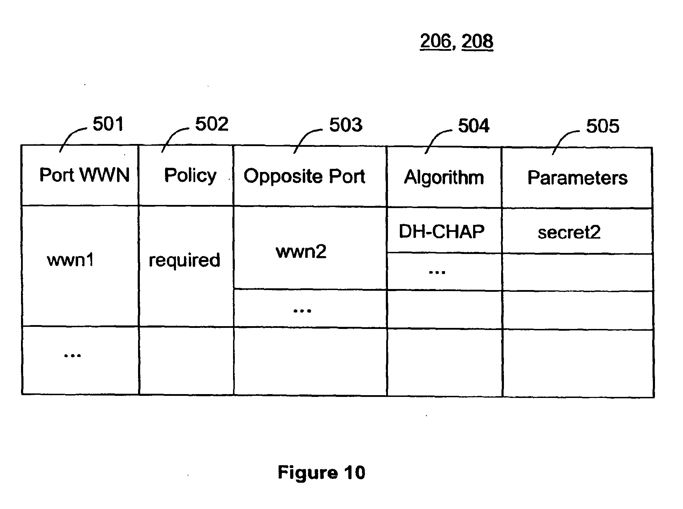

Figure 10 illustrates a connection authentication table 206. Table 206 contains information about connection authentication, i.e. authentication between ports directly connected to each other by a Fibre Channel cable. As shown in table 206, the information includes the WWN of the port 501, with an authentication policy 502 as required, the WWNs of opposite ports 503, the particular algorithm 504 used for the opposite ports, and any parameters 505 necessary for such use. If the policy 502 is set to "required" the port cannot be connected to a port which does not support the authentication mechanism. If the policy is set to "optional," then that port can be connected to a port which does not support authentication.

Table 206 shown in Figure 10 is also representative of connection authentication table 208 shown in Figure 7. In this case the information is considered to be information about authentication between ports which are the source and destination of the Fibre Channel exchange transaction.

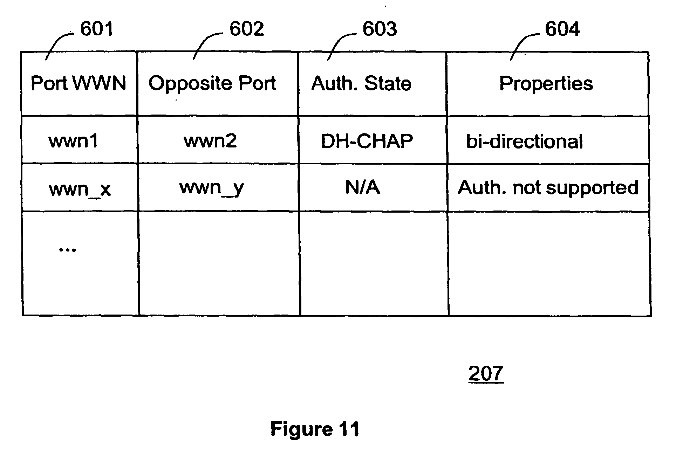

Figure 11 illustrates a connection state table 207. As shown there, the information in the table provides the authentication state of each connection authentication. The information includes a port WWN 601, the WWN of an opposite port 602 directly connected to port 601, the state of authentication of the opposite port 603, and properties of the authentication for each port. If the authentication state 603 is N/A, then the opposite port is not authenticated. Otherwise, the particular algorithm specified is used for authentication.

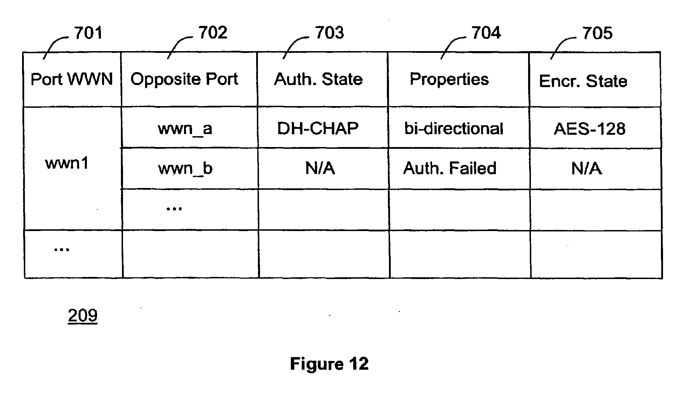

Figure 12 illustrates a communication state table 209. As shown there, table 209 contains the current state of each connection authentication. This includes the port WWN 701, the opposite port 702 which communicates with port 701, the state of authentication of the opposite port 703, the properties of the authentication 704, and the encryption state of communications between the designated ports. If the encryption state 705 is N/A, then communication between those two ports is not encrypted. Otherwise the algorithm used is specified. Because one port 701 can communicate with multiple opposite ports 702, the table may include multiple rows for each particular port 701 listed.

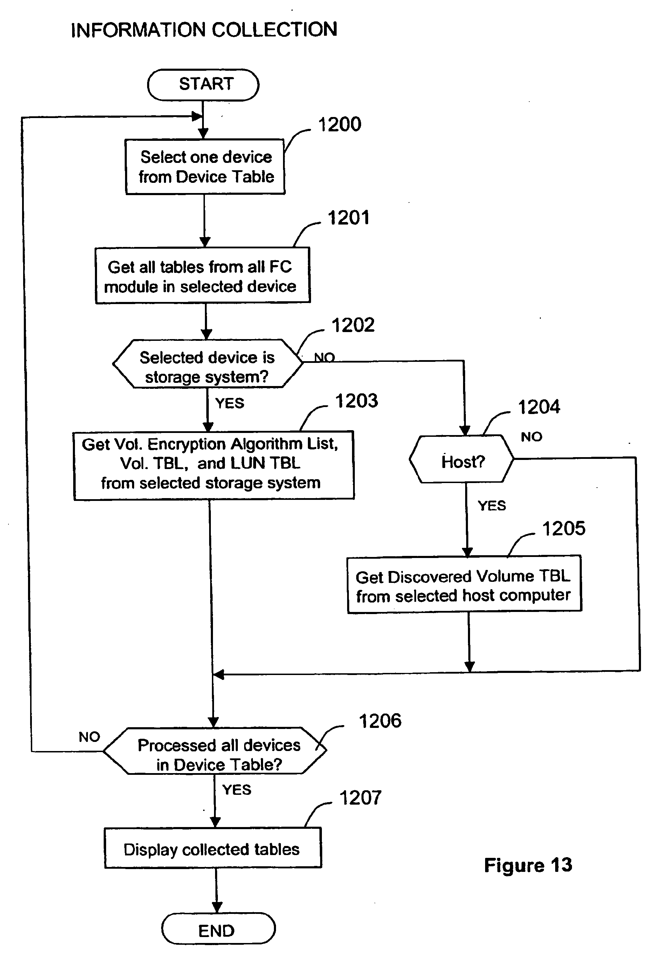

Figure 13 is a flowchart illustrating the process flow executed by management program 144 (see Figure 1) in collecting security information from the various devices in the network. The process begins at step 1200 in which one device is selected from device table 145 (Figure 6). The IP address for that device is then retrieved. After that, the management program sends instructions to the IP address of the device. The instructions are received by the Host Agent Program, the Switch Control Program, or the Storage Control Program. The receiver collects all tables from all Fibre Channel modules in the device, and sends them to the management program, as shown by step 1201. If the selected device is a storage system as determined at step 1202, the management program proceeds to step 1203. If it is not, then the program proceeds to step 1204. If the selected device is a storage system, as shown by step 1203 then program sends other instructions to retrieve the volume encryption algorithm list, the volume table, and the LUN table as shown by step 1203. In contrast, if the device is a host computer, then the management program sends other instructions to retrieve the discovered volume table 1205. As shown by step 1206 the process in Figure 13 repeats until all devices in the device table have been processed. Finally, the management program displays the values in the collected tables as security information for each device, as shown by step 1207. Each collected table is stored in memory 143 and is associated with its source device and the Fibre Channel module.

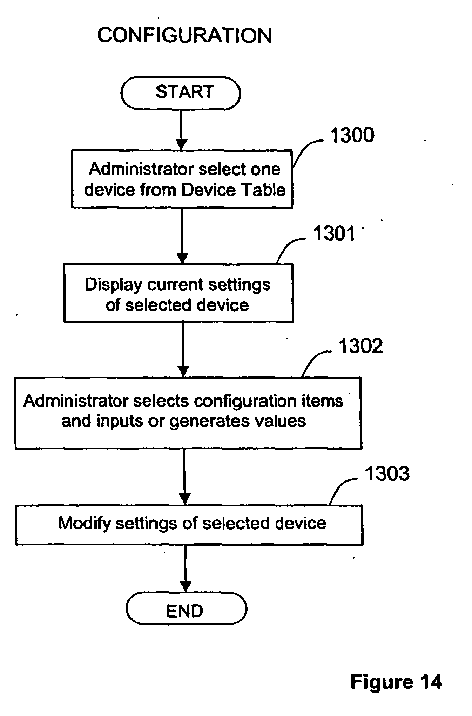

Figure 14 is a flowchart illustrating the configuration of security settings. This flowchart illustrates the process flow executed by the management program 144 to configure the security settings of a device. The particular settings are usually selected by a technician when the system is initially configured, or by a user of the system. The process begins with a storage administrator or technician selecting one device from the device table 145, as shown in step 1300. The management program then displays the current settings of the selected device at step 1301. This step results in the collected tables from that device being displayed. In response, the administrator, as shown in step 1302, selects configuration items and inputs or generates new values of the selected items as necessary. Next, the management program sends instructions and values to the specified device, and the receiving device modifies the specified values in its local tables, as shown by step 1303. The process then ends.

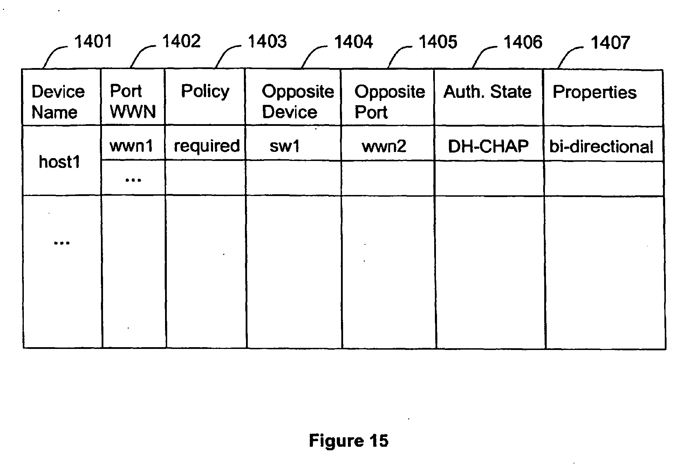

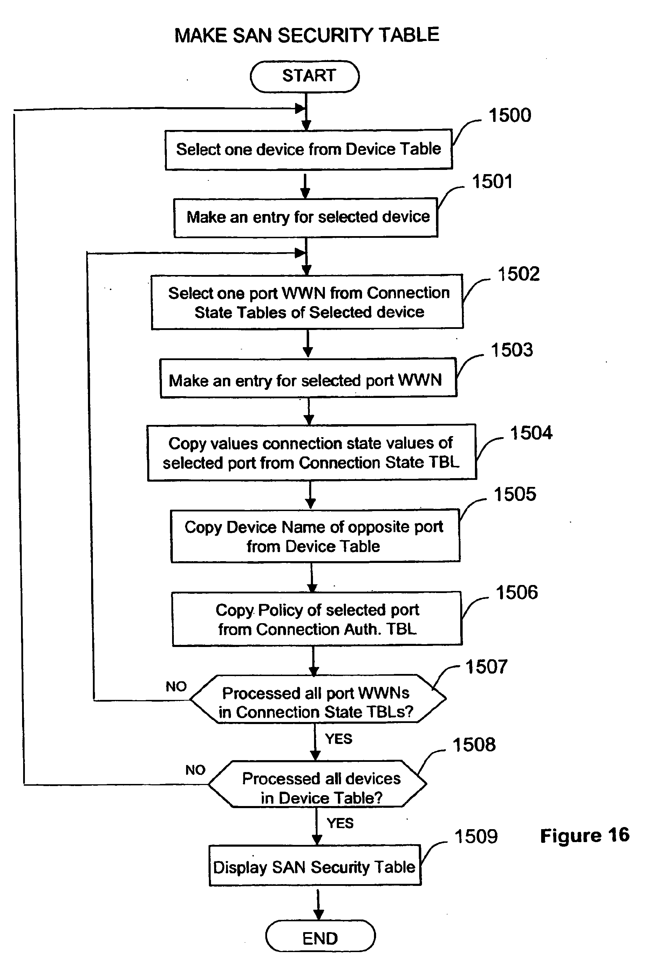

Figure 15 illustrates the SAN security table stored in memory 143 by management program 144. (Figure 16 describes the process for collecting this data.) As shown in Figure 15, the security table consists of a collection of the authentication state of all connections in the storage network. Preferably, for each device in the system, it includes the device name 1401, the port 1402, the authentication policy of that port 1403, the device name of the opposite port 1404, the worldwide name of the opposite port 1405, the current authentication state of the opposite port 1406, and the properties of the authentication 1407 for each connection. The table in Figure 15 illustrates that for host 1 communications between port wwn1 and the opposite device sw1 require an authentication state of DH-CHAP, and that communication is bidirectional.

Figure 16 is a flowchart illustrating operations performed by the management program 144 in making a SAN security table, such as shown in Figure 15. The initial step is to select one device from the device table 145, as shown by step 1500. The system then makes an entry, that is, a line of the SAN security table, and copies the device name of the selected device. Next, as shown in step 1502, one port WWN is selected from the connection state table for the selected device. As shown by step 1503, an entry is then made for the selected port. Next, at step 1504, values in the connection state table are copied into the SAN security table. The values in columns 601, 602, 603, and 604 in the state table are copied into columns 1402, 1405, 1406, and 1407, respectively.

Next, as shown by step 1505, a search is made for the device having a WWN of the opposite port to the selected port from the collected tables, and that information is copied into column 1404. Then, as shown by step 1506, the management program copies the connection authentication policy of the selected port from the connection authentication table 206.

As shown by steps 1507 and 1508, steps 1502 through 1506 are then repeated for all ports in the selected device, and for all devices in the device table. When the operation is completed, as shown by step 1509, the security table may be displayed to an administrator of the system.

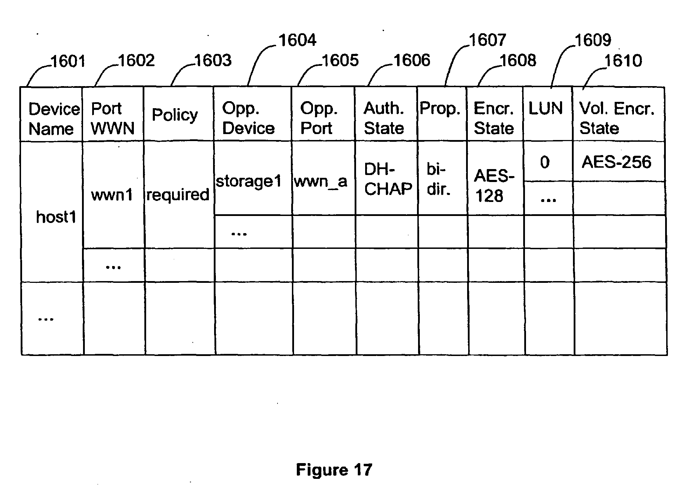

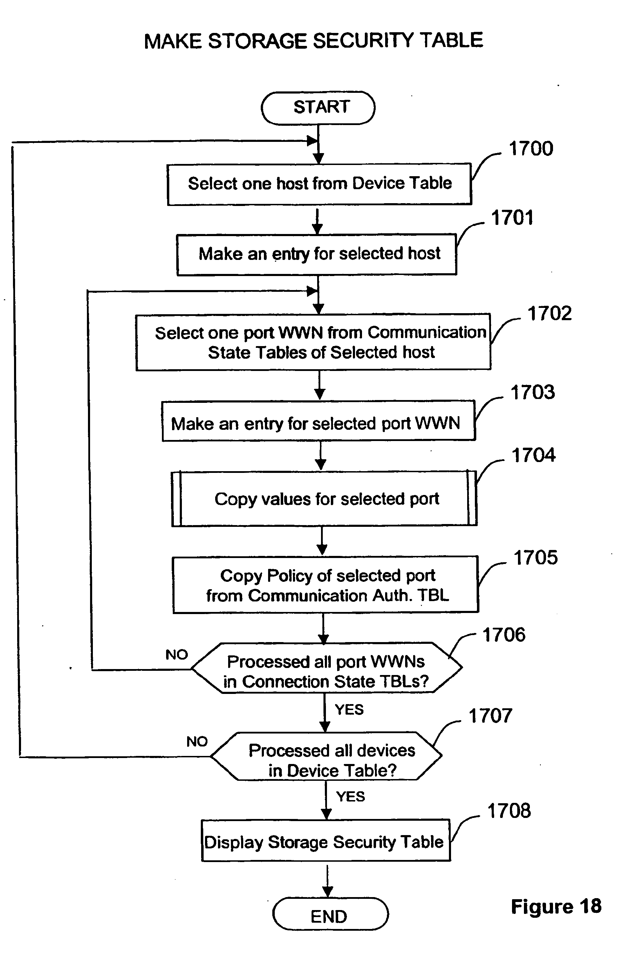

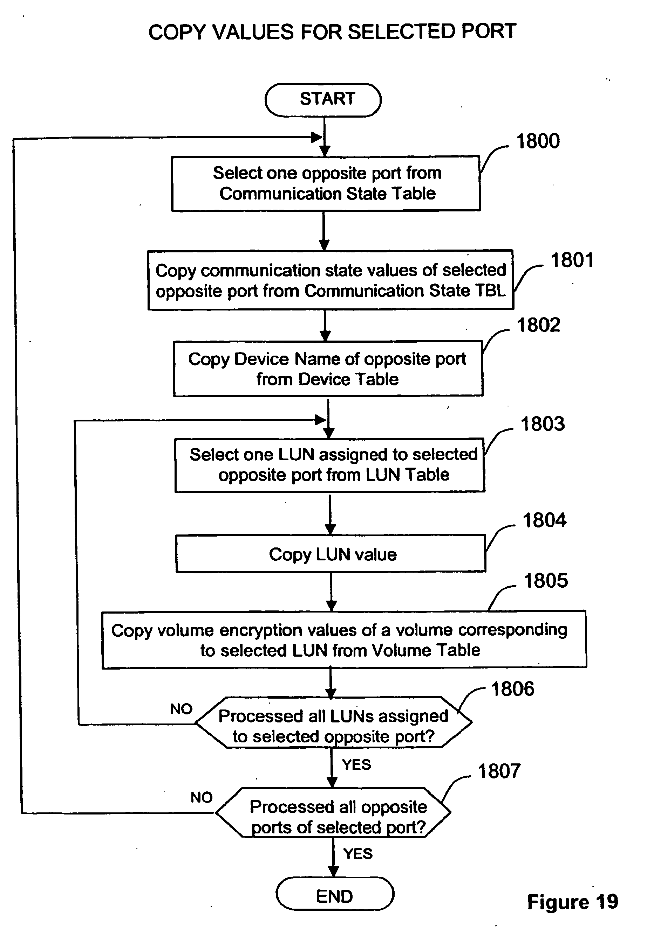

Figure 17 illustrates a storage security table as stored in memory 143 by management program 144. (Figures 18 and 19 describe the process for collecting this data.) The table includes the communication authentication state of all connections between the host computers and the storage systems. The table includes the host name 1601, the WWN of the host port 1602, the authentication policy of that port 1603, the names of the opposite devices 1604 to that designated host port 1602, the WWNs of the storage ports, and the authentication state of such port. In addition, also displayed are the properties of the authentication 1607, the current encryption state 1608 of communications between the host and the storage port, the LUN 1609 accessible through that port, and the encryption state of that LUN 1610.

Figures 18 and 19 show the process flow executed by management program 144 to make the storage security table shown in Figure 17. The operations depicted in Figure 18 are similar to those discussed in Figure 16, except that reference is made to the communication state table instead of the connection state table. Thus, these steps are not further discussed here. Step 1704, however, is shown in detail in Figure 19. As shown there, in step 1800 the management program selects an opposite port from the communication state table to the port selected in step 1702. The management program then copies the values in the communication state table to the storage security table shown in Figure 17. The values in column 701, 702, 703, 704, and 705 in the communication state table are copied into columns 1602, 1605, 1606, 1607, and 1608, respectively. This operation is shown in step 1801 of Figure 19. Step 1802 is similar to step 1505 previously discussed. Next, in step 1803, the management program looks for the LUN table which contains the selected opposite port, selects one LUN assigned to that port from the LUN table and copies that value to column 1609, as shown by step 1804. Then the management program looks for the disk volume corresponding to the selected LUN from the volume table in the storage system. This operation is performed by looking for the opposite port and copying the volume encryption algorithm to column 1601, as shown by step 1805. Steps 1803 - 1805 are then repeated for all LUNs assigned to the selected opposite port, as shown by step 1806. Step 1807 illustrates the repetition of steps 1800 to 1806 until all ports opposite to the selected port have been processed.

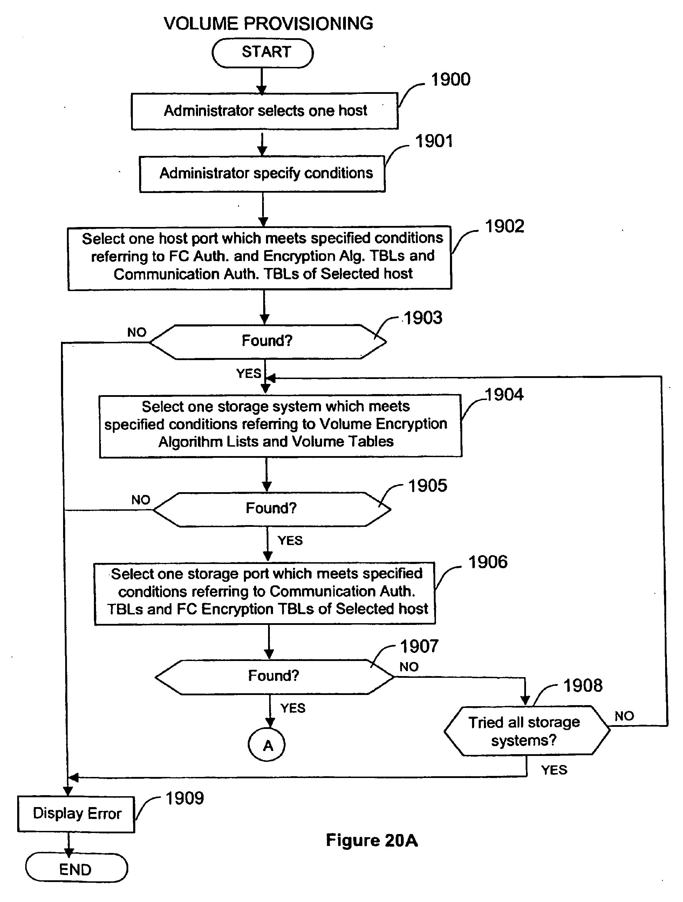

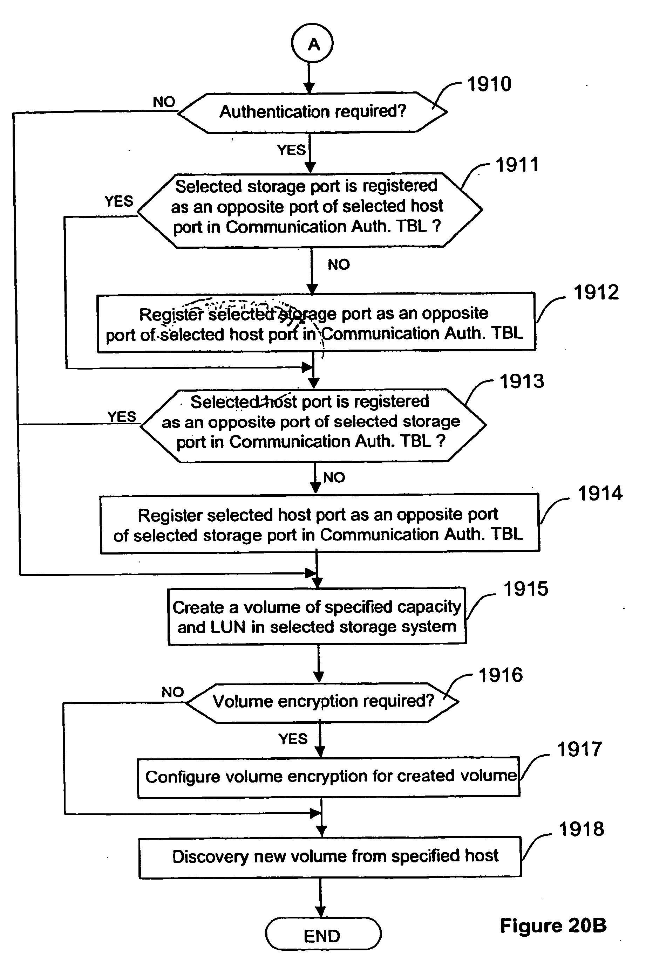

Figure 20 is a flowchart illustrating the secure provisioning process executed by management program 1404 to provision a disk volume to a specified host according to a specified security level. The process is initiated by a storage administrator. Beginning at step 1900 the administrator selects the host to which the volume is to be provisioned. This is carried out using an appropriate interface device, such as a keyboard, mouse and display. In addition the administrator specifies the security level for that disk volume. (See step 1901). The condition specified includes the necessity of communication authentication, communication encryption, volume encryption, and the capacity of the disk volume to be provisioned. Of course, fewer or more conditions can be specified with some conditions left in a "default" state for that system if they are not otherwise specified.

At step 1902 the management program selects one host port that meets the specified condition of communication authentication and encryption. If communication authentication is necessary, the policy of the port is set for "required" and registered in the communication authentication table, Otherwise, the policy may be set to "optional." If no port is found at step 1903, the management program then displays an error as shown by step 1909 and the process ends. On the other hand, if at step 1903 one is found, the program selects one storage system which meets the specified condition of volume encryption and capacity, as shown by step 1903. If volume encryption is required, then the management program will search for a storage system which supports the appropriate encryption algorithm by referring to the volume encryption algorithm list. Otherwise any storage system which has sufficient capacity can be chosen.

If an appropriate storage system is found, then the management program selects a storage port which meets the specified communication condition regarding authentication and encryption. This is shown at step 1906. This step is similar to step 1902, but the storage port to be selected must support at least one authentication algorithm supported by the selected host port if communication authentication is necessary. If no port is found in this step, as shown by step 1907, the operation transitions back to step 1904 to select another storage system as shown by step 1908. If no port in any of the storage systems meets the specified condition, the management program displays an error and the flow ends as shown by step 1909.

Moving to Figure 20B, which is a continuation of the process flow from location "A" in Figure 20A, a first operation is shown by step 1910. If communication authentication is necessary and the selected storage port is not registered as an opposite port of a selected host port in the communication authentication table as shown by step 1911, the management program sends instructions to the host agent program in the specified host to register the selected stored port as an opposite port of the selected host port in the communication authentication table. See step 1912. The system may also generate properties used by the authentication algorithm. Steps 1913 and 1914 are similar to steps 1911 and 1912. Next, the management program creates a disk volume of the specified capacity and an LUN in the selected storage system, as shown by step 1915. If volume encryption is necessary, as shown by step 1916, instructions and parameters are sent to the selected storage system to make the created volume an encrypted volume. (See step 1917). Finally, instructions are sent to the specific host to discover the new volume, as shown by step 1918.

The result of all of the collection and configuration processing discussed above enables an administrator to remotely manage the security settings of all devices in a storage network using the management server. By use of the SAN security table, the administrator can browse the policy and state of connection authentications associated with devices and ports, and easily find secure or insecure connections. Use of the storage security table enables the administrator to browse the policy and state of end-to-end communication authentication encryption, enabling the administrator to easily find secure and insecure paths and disk volumes in operation. In addition, use of the provisioning procedure described above enables an administrator to provision a disk volume to a host computer without the need for manually searching storage system and ports for their required security conditions. In the preferred embodiment discussed above, the security information has been presented and displayed in the form of tables. However, such information can easily be displayed graphically, for example using the topology of the storage network with various colors or other indicia to indicate authentication states and encryption for connections, ports, and volumes.

The description above has been of preferred embodiments of the invention. It will be appreciated that the scope of the invention is set forth n the appended claims as interpreted by the description and the drawings.

## Claims

1. A storage system (130) comprising:
at least one port (131, 132) for being connected via a communications link (161, 162) to at least one port (123) in an external device, the communications link being capable of transferring authenticated communications; and
a plurality of storage media (152, 153) coupled to a storage controller, the storage media being capable of storing encrypted data using an encryption technique, **characterized in that**
the storage controller (151) is coupled to receive data via the at least one port (131, 132) in the storage system and **in that** the storage system further comprises
a management program (144) operating on a computer (140) coupled to the storage controller (130) and to the at least one port (150) of the storage system, the management program operating to determine whether the communications link (161, 162) is authenticated and to determine whether an encryption technique was used in the storage media (152, 153), and to maintain a record of such determinations; and
a display for displaying the record to a user of the storage system.

2. A storage system as in claim 1 wherein the management program (144) maintains a record of whether every communications link (161, 162) coupled to the storage system (130) is authenticated, and a record of the encryption status of every storage media (152, 153) is encrypted.

3. A storage system as in claim 2 wherein the management program (144) maintains a record of a type of authentication for each communication link (161, 162) and a record of a type of encryption for every storage media (152, 153).

4. A storage system as in claim 1 wherein the external device comprises a switch (120) having ports (123) coupled to the storage system (130) and other ports (121, 122) adapted to be coupled to a host computer (100, 110); and
wherein the management program (144) determines whether each communications link (160,161,162, 163) between the storage system (130) and the switch (120) and between the switch and the host (100, 110) is authenticated.

5. A storage system as in claim 1 wherein the record comprises a table having entries for each port (131, 132) and each storage media (152, 153).

6. A storage system as in claim 5 wherein the external device comprises at least one host computer (100, 110), and the record includes a name for each device, a name for each port, an authentication state for each communications link, a logical unit number for each storage media, and an encryption state for each storage media.

7. A storage system as in claim 1 wherein the communication link (162, 163) comprises a Fibre Channel link.

8. A storage system as in claim 1 wherein the storage media (152, 153) comprise hard disk drives.

9. A method implemented by execution of a management program (144) contained in a management computer (140) coupled to a storage system (130) having a plurality of communication ports (131, 132) and a plurality of storage media (152, 153), the storage system being adapted to be coupled to at least one host computer (100, 110), the method comprising:
compiling a list of devices within and coupled to the storage system is prepared, the devices having ports;
for each device, collecting information about the ports of the device;
collecting information about the storage media (152, 153);
collecting information about the at least one host (100, 110);
preparing a record of any authentication state for each port (131, 132); and preparing a record of any encryption state for each storage media (152, 153).

10. A method as in claim 9 wherein the record comprises a table displayed to a user of the system.

11. A method as in claim 9 wherein the step of collecting information about the ports of the device comprises:
selecting a port;
determining all ports coupled to the selected port;
determining any authentication policy for communications between the port selected and each port coupled to the selected port;
repeating the steps of selecting a port, determining all ports coupled to the selected port; and determining any authentication policy for communications between the port selected and each port coupled to the selected port until all ports have been processed.

12. A method as in claim 9 wherein the step of collecting information about the storage media comprises:
selecting a port;
determining all storage media coupled to the selected port;
determining any encryption policy for the storage media coupled to the selected port; and
repeating the steps of selecting a port, determining all storage media coupled to the selected port, and determining any encryption policy for the storage media coupled to the selected port, until all ports have been processed.

13. A method as in claim 9 further comprising using the information about the ports to provision additional storage media for the storage system.

14. A method as in claim 13 followed by the step of configuring the additional storage media to have a desired encryption status.

## Patentansprüche

1. Speichersystem (130) umfassend:
mindestens einen Anschluß (131, 132) dafür, über eine Kommunikationsverbindung (161, 162) mit mindestens einem Anschluß (123) in einem externen Gerät verbunden zu werden, wobei die Kommunikationsverbindung authentifizierte Kommunikation übertragen kann; und
mehrere Speichermedien (152, 153), die mit einer Speichersteuerung verbunden sind, wobei die Speichermedien verschlüsselte Daten mittels einer Verschlüsselungstechnik speichern können, **gekennzeichnet dadurch, daß**
die Speichersteuerung (151) so verbunden ist, daß sie Daten über den mindestens einen Anschluß (131, 132) im Speichersystem empfangen kann und daß das Speichersystem ferner umfaßt:
ein Verwaltungsprogramm (144), das auf einem mit der Speichersteuerung (130) und dem mindestens einem Anschluß (150) des Speichersystem verbundenen Computer (140) läuft, wobei das Verwaltungsprogramm zum Bestimmen darüber, ob die Kommunikationsverbindung (161, 162) authentifiziert ist und ob die Verschlüsselungstechnik in den Speichermedien (152, 153) verwendet wurde, und zum Aufrechterhalten einer Registrierung dieser Bestimmungen dient; und
eine Anzeige zum Anzeigen der Registrierung für einen Benutzer des Speichersystems.

2. Speichersystem nach Anspruch 1, wobei das Verwaltungsprogramm (144) eine Registrierung davon, ob jede mit dem Speichersystem (130) verbundene Kommunikationsverbindung (161, 162) authentifiziert ist, und eine Registrierung des Verschlüsselungszustands jedes Speichermediums (152, 153) aufrechterhält.

3. Speichersystem nach Anspruch 2, wobei das Verwaltungsprogramm (144) eine Registrierung eines Authentifizierungstyps für jede Kommunikationsverbindung (161, 162) und eine Registrierung eines Verschlüsselungstyps für jedes Speichermedium (152, 153) aufrechterhält.

4. Speichersystem nach Anspruch 1, wobei das externe Gerät einen Schalter (120) mit Anschlüssen (123), die mit dem Speichersystem (130) verbunden sind, und anderen Anschlüssen (121, 122), die dazu ausgelegt sind, mit einem Hostcomputer (100, 110) verbunden zu werden, umfaßt; und
wobei das Verwaltungsprogramm (144) bestimmt, ob jede Kommunikationsverbindung (160, 161, 162, 163) zwischen dem Speichersystem (130) und dem Schalter (120) und zwischen dem Schalter und dem Host (100, 110) authentifiziert ist.

5. Speichersystem nach Anspruch 1, wobei die Registrierung eine Tabelle mit Einträgen für jeden Anschluß (131, 132) und jedes Speichermedium (152, 153) umfaßt.

6. Speichersystem nach Anspruch 5, wobei das externe Gerät mindestens einen Hostcomputer (100, 110) umfaßt und die Registrierung einen Namen für jedes Gerät, einen Namen für jeden Anschluß, einen Authentifizierungszustand für jede Kommunikationsverbindung, eine logische Einheitsnummer für jedes Speichermedium und einen Verschlüsselungszustand für jedes Speichermedium enthält.

7. Speichersystem nach Anspruch 1, wobei die Kommunikationsverbindung (162, 163) eine Fiber-Channel-Verbindung umfaßt.

8. Speichersystem nach Anspruch 1, wobei die Speichermedien (152, 153) Festplattenlaufwerke umfassen.

9. Verfahren, implementiert durch die Ausführung eines Verwaltungsprogramms (144), das in einem Verwaltungscomputer (140) enthalten ist, der mit einem Speichersystem (130) mit mehreren Kommunikationsanschlüssen (131, 132) und mehreren Speichermedien (152, 153) verbunden ist, wobei das Speichersystem dazu ausgelegt ist, mit mindestens einem Hostcomputer (100, 110) verbunden zu werden, wobei das Verfahren umfaßt:
Kompilieren einer Liste von Geräten innerhalb des Speichersystems und in Verbindung mit diesem, wobei die Geräte Anschlüsse aufweisen;
Sammeln, für jedes Gerät, von Informationen über die Anschlüsse des Geräts;
Sammeln von Informationen über die Speichermedien (152, 153);
Sammeln von Informationen über den mindestens einen Host (100, 110);
Vorbereiten einer Registrierung eines Authentifizierungszustands für jeden Anschluß (131, 132); und
Vorbereiten einer Registrierung eines Verschlüsselungszustands für jedes Speichermedium (152, 153).

10. Verfahren nach Anspruch 9, wobei die Registrierung eine einem Benutzer des Systems angezeigte Tabelle umfaßt.

11. Verfahren nach Anspruch 9, wobei das Sammeln von Informationen über die Anschlüsse des Geräts umfaßt:
Auswählen eines Anschlusses;
Bestimmen aller mit dem ausgewählten Anschluß verbundener Anschlüsse;
Bestimmen einer Authentifizierungsrichtlinie für Kommunikation zwischen dem ausgewählten Anschluß und jedem mit dem ausgewählten Anschluß verbundenen Anschluß;
Wiederholen der Schritte des Auswählens eines Anschlusses, des Bestimmens aller mit dem ausgewählten Anschluß verbundener Anschlüsse und des Bestimmens einer Authentifizierungsrichtlinie für Kommunikation zwischen dem ausgewählten Anschluß und jedem mit dem ausgewählten Anschluß verbundenen Anschluß, bis alle Anschlüsse bearbeitet worden sind.

12. Verfahren nach Anspruch 9, wobei das Sammeln von Informationen über die Speichermedien umfaßt:
Auswählen eines Anschlusses;
Bestimmen aller mit dem ausgewählten Anschluß verbundenen Speichermedien;
Bestimmen einer Verschlüssalungsrichtlinie für die mit dem ausgewählten Anschluß verbundenen Speichermedien; und
Wiederholen der Schritte des Auswählens eines Anschlusses, des Bestimmens aller mit dem ausgewählten Anschluß verbundenen Speichermedien und des Bestimmens einer Verschlüsselungsrichtlinie für die mit dem ausgewählten Anschluß verbundenen Speichermedien, bis alle Anschlüsse bearbeitet worden sind.

13. Verfahren nach Anspruch 9, ferner umfassend das Verwenden der Informationen über die Anschlüsse, um zusätzliche Speichermedien für das Speichersystem bereit zu stellen.

14. Verfahren nach Anspruch 13, gefolgt von einem Schritt, in dem die zusätzlichen Speichermedien so eingerichtet werden, daß sie einen erwünschten Verschlüsselungszustand aufweisen.

## Revendications

1. Système de stockage (130) comprenant:
au moins un port (131, 132) destiné à être connecté par une liaison de communication (161, 162) à au moins un port (123) dans un dispositif externe, la liaison de communication étant apte à transférer des communications authentifiées; et
plusieurs supports de stockage (152, 153) couplés à un dispositif de commande de stockage, les supports de stockage étant aptes à stocker des données cryptées en utilisant une technique de cryptage, **caractérisé en ce que**
le dispositif de commande de stockage (151) est couplé pour recevoir des données par le au moins un port (131, 132) dans le système de stockage, et **en ce que** le système de stockage comprend en outre:
un programme de gestion (144) fonctionnant sur un ordinateur (140) couplé au dispositif de commande de stockage (130) et à au moins l'orifice précité (150) du système de stockage, le programme de gestion fonctionnant pour déterminer si la liaison de communication (161, 162) est authentifiée et pour déterminer si une technique de cryptage a été utilisée dans les supports de stockage (152, 153) et pour maintenir un enregistrement de ces déterminations; et
un affichage pour afficher l'enregistrement pour un utilisateur du système de stockage.

2. système de stockage selon la revendication 1, où le programme de gestion (144) conserve un enregistrement si chaque liaison de communication (161, 162) couplée au système de stockage (130) est authentifiée, et un enregistrement de l'état de cryptage de chaque support de stockage (152, 153) est crypté.

3. Système de stockage selon la revendication 2, où le programme de gestion (144) conserve un enregistrement d'un type d'authentification pour chaque liaison de communication (161, 162) et un enregistrement d'un type de cryptage pour chaque support de stockage (152, 153).

4. Système de stockage selon la revendication 1, où le dispositif externe comprend un commutateur (120) ayant des ports (123) couplés au système de stockage (130) et aux autres ports (121, 122) apte à être couplé à un ordinateur hôte (100, 110); et
où le programme de gestion (144) détermine si chaque liaison de communication (160, 161, 162, 163) entre le système de stockage (130) et le commutateur (120) et entre le commutateur et l'hôte (100, 110) est authentifiée.

5. Système de stockage selon la revendication 1, où l'enregistrement comprend une table ayant des entrées pour chaque port (131, 132) et chaque support de stockage (152, 153).

6. Système de stockage selon la revendication 5, où le dispositif externe comprend au moins un ordinateur hôte (100, 110), et l'enregistrement comprend un nom pour chaque dispositif, un nom pour chaque port, un état d'authentification pour chaque liaison de communication, un numéro d'unité logique pour chaque support de stockage et un état de cryptage pour chaque support de stockage.

7. Système de stockage selon la revendication 1, où la liaison de communication (162, 163) comprend une liaison de Canal Fibre.

8. Système de stockage selon la revendication 1, où le support de stockage (152, 153) comprend des lecteurs de disque dur.

9. Procédé mis en oeuvre par l'exécution d'un programme de gestion (144) se trouvant dans un ordinateur de gestion (140), couplé à un système de stockage (130) ayant une pluralité de pores de communication (131, 132) et une pluralité de supports de stockage (152, 153), le système de stockage étant apte à être couplé à au moins un ordinateur hôte (100, 110), le procédé comprenant
la compilation d'une liste de dispositifs dans et couplés au système de stockage est préparée, les dispositifs ayant des ports;
pour chaque dispositif, recueillir des informations se rapportant aux ports du dispositif;
recueillir des informations se rapportant aux supports de stockage (152, 153);
recueillir des informations se rapportant à au moins un hôte précité (100, 110);
préparer un enregistrement de tout état d'authentification pour chaque port (131, 132); et préparer un enregistrement de tout état de cryptage pour chaque support de stockage (152, 153).

10. Procédé selon la revendication 9, où l'enregistrement comprend une table affichée à un utilisateur du système.

11. Procédé selon la revendication 9, dans lequel l'étape de collecte d'informations se rapportant aux ports du dispositif comprend:
sélectionner un port;
déterminer tous les ports couplés au port sélectionné;
déterminer toute police d'authentification pour des communications entre le port sélectionné et chaque port couplé au port sélectionné;
répéter les étapes de sélection d'un port, déterminer tous les ports couplés au port sélectionné; et déterminer toute police d'authentification pour des communications entre le port sélectionné et chaque port couplé au port sélectionné jusqu'à ce que tous les ports aient été traités.

12. Procédé selon la revendication 9, dans lequel l'étape de collecte d'informations se rapportant au support de stockage comprend:
sélectionner un port;
déterminer tous les supports de stockage couplés aux port sélectionné;
déterminer toute police de cryptage pour les supports de stockage couplés aux ports sélectionnés; et
répéter les étapes de sélection d'un port, de détermination de tous les supports de stockage couplés au port sélectionné et de détermination, de toute police de cryptage pour les supports de stockage couplés au port sélectionné jusqu'à ce que tous les ports aient été traités.

13. Procédé selon la revendication 9, comprenant en outre l'utilisation de l'information se rapportant aux ports pour la provision de supports de stockage additionnels pour le système de stockage.

14. Procédé selon la revendication 13, suivi de l'étape consistant à configurer les supports de stockage additionnels pour qu'ils aient un état de cryptage souhaité.
